# EUROPEAN PATENT APPLICATION

(11) **EP 2 237 210 A1**
(43) Date of publication of application: **06.10.2010**
(21) Application number: 10157420.0
(22) Date of filing: 23.03.2010
(51) Int. Cl.: G06Q 30/00

(54) **Information distribution**

(30) Priority: 31.03.2009 US 384062
(71) Applicant: Sony Corporation, Minato-ku Tokyo 108-0075 (JP); Sony Electronics Inc., Park Ridge, NJ 07656 (US)
(72) Inventor: Rainier, Rajiv, San Diego California 92127 (US); Frazier, Milton, San Marcos California 92069 (US)
(74) Representative: Scaddan, Gareth Casey

(57) **Abstract**

A system for implementing an information distribution network includes an information service that is configured to provide information distribution services through the information distribution network. User devices are utilized by device users to communicate with the information service for receiving the information distribution services. A subset of the device users form a social network with corresponding ones of the user devices. Transport structures are implemented for communicating with various network entities in the information distribution network. The transport structures collect appropriate metadata for providing selected information from the information service to targeted ones of the device users. The metadata includes social network metadata that characterizes the subset of device users from the social network.

## Description

### Field of the Invention

This invention relates generally to information distribution. Embodiments of this invention relate to techniques for distributing electronic information, and relate more particularly to a system and method for utilizing a transport structure in a social network environment.

### Background of the Invention

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for utilizing a transport structure in a social network environment are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, a social network of certain of the device users, and respective advertisers from an information service. In addition, the transport structures may also be utilized to provide links to targeted advertisements and/or electronic content to appropriate user devices.

In certain embodiments, one or more transport structures are initially created in any effective manner. For example, the transport structures may be embedded in user devices during manufacture, and then activated by device users. Alternately, an appropriate entity in the distribution system may create or otherwise provide the initial transport structures. Advertiser metadata from one or more advertisers may be added to the transport structures in any effective manner to represent relevant characteristics and advertising goals of the corresponding advertisers.

In addition, appropriate media files may be created to include information for dissemination to targeted device users through the distribution system. The media files may include any desired information, such as advertisements and/or content items. Next, a device user may perform a registration procedure to subscribe for receiving information from the distribution system. During the registration procedure, the device user typically provides various types of relevant information including, but not limited to, user metadata and device metadata. The transport structures are updated to include the user metadata provided by the device user during the foregoing registration procedure.

In certain embodiments, a transport server or another appropriate entity in the distribution system may determine whether any device users have been identified as members of a social network with corresponding user devices. For example, in certain embodiments, device users may perform a social network registration procedure to define a social network in distribution system. If a social network has been created, then the transport server or other appropriate entity may communicate with the user devices in the social network by utilizing any effective means.

The transport server may obtain appropriate social network metadata regarding the device users and the user devices in the social network. In certain embodiments, the social network metadata may include, but is not limited to, information from a user profile and a device profile that collectively describe any desired attributes, preferences, or characteristics related to a user device or a device user. The transport server preferably updates the transport structures to include any relevant social network metadata.

The transport server or other appropriate entity then analyzes the metadata (including the social network metadata) in the transport structures by utilizing any appropriate techniques to create specific transport recommendations for sending appropriate targeted advertisements or content items. For example, in certain embodiments, the transport server may match advertiser characteristics from advertiser metadata with corresponding social network characteristics from one or more device users from the social network to produce the transport recommendations.

The transport server may transmit the transport recommendations to the user device by utilizing any effective means. For example, the transport recommendations may be transmitted to the user device by utilizing the transport structures. The device user then may either accept or reject the transmitted transport recommendations. In certain embodiments, the transport server or other appropriate entity generates effectiveness measures based upon whether the device user accepts or rejects the original transport recommendations. The transport server then updates the transport structures with the newly-calculated effectiveness measures.

In certain embodiments, the transport server may archive new information or metadata in a metadata warehouse that is implemented in any effective manner to provide access to the archived information and metadata at a subsequent time. In accordance with embodiments of the present invention, the various types of metadata (including the effectiveness measures and social network metadata) from the transport structures may be analyzed to identify specific targeted information for transmission to the device user. An ad server or other appropriate entity in the distribution system may then prepare and send links to the designated media file(s) to allow the targeted device user to access the media file(s). For at least the foregoing reasons, embodiments of the present invention therefore provide an improved system and method for utilizing transport structures in a social network environment.

### Brief Description of the Drawings

Embodiments of the invention will now be described with reference to the accompanying drawings, throughout which like parts are referred to by like references, and in which:
FIG. 1A is a block diagram of a distribution system, in accordance with one embodiment of the present invention;
FIG. 1B is a block diagram of a social network, in accordance with one embodiment of the present invention;
FIG. 2A is a block diagram for one embodiment of a transport structure;
FIG. 2B is a block diagram for one embodiment of a media file;
FIG. 3 is a block diagram for one embodiment of a user device from FIG. 1A;
FIG. 4 is a block diagram for one embodiment of the user memory from FIG. 3;
FIG. 5 is a block diagram for one embodiment of the information service from FIG. 1A;
FIG. 6A is a block diagram for one embodiment of the transport server from FIG. 5;
FIG. 6B is a block diagram for one embodiment of the transport server memory from FIG. 6A;
FIG. 7 is a block diagram for one embodiment of the ad server from FIG. 5; and
FIGS. 8A-8D are a flowchart of method steps for utilizing a transport structure in a social network environment, in accordance with one embodiment of the present invention.

### Description of the Example Embodiments

Embodiments of the present invention relate to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

An embodiment of the present invention comprises a system and method for implementing an information distribution network, and includes an information service that is configured to provide information distribution services through the information distribution network. User devices are utilized by device users to communicate with the information service for receiving the information distribution services. A subset of the device users are defined to form a social network with corresponding ones of the user devices. Transport structures are implemented for communicating with various network entities in the information distribution network. The transport structures collect appropriate metadata for providing selected information from the information service to targeted ones of the device users. The metadata collected by the transport structures includes social network metadata that characterizes the device users of the social network.

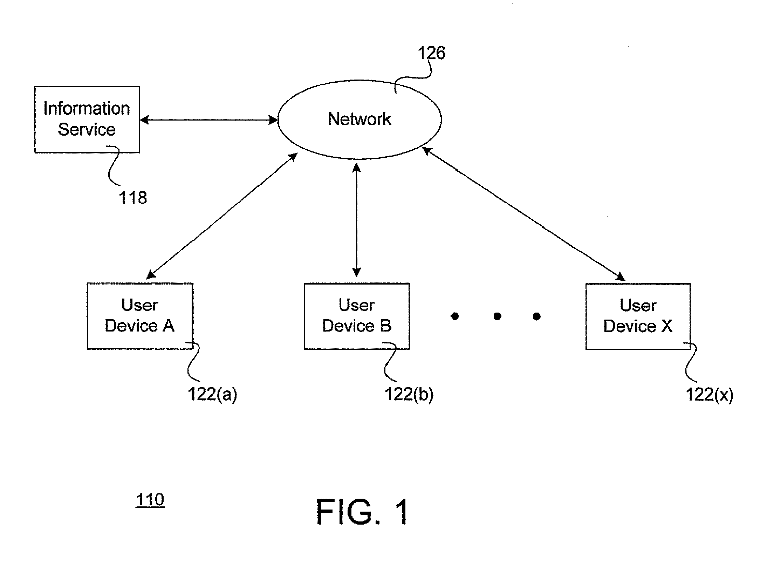

Referring now to FIG. 1A, a block diagram of a distribution system 110 is shown, in accordance with one embodiment of the present invention. In the FIG. 1A embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1A embodiment.

In accordance with an embodiment of the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1A distribution system 110 supports a "push" model that automatically selects and transmits appropriate advertising information to targeted device users based upon corresponding metadata that defines the device users and the various advertisers, and may also represent one or more social networks.

In the FIG. 1A embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

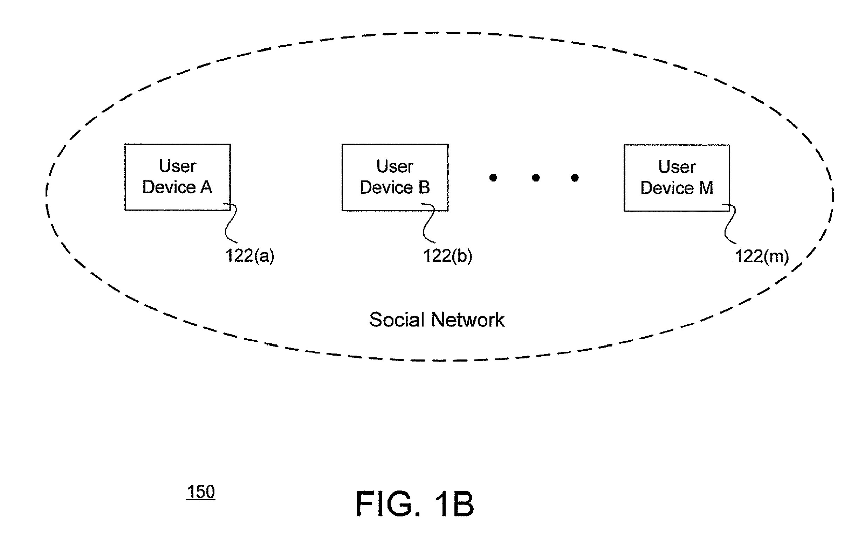

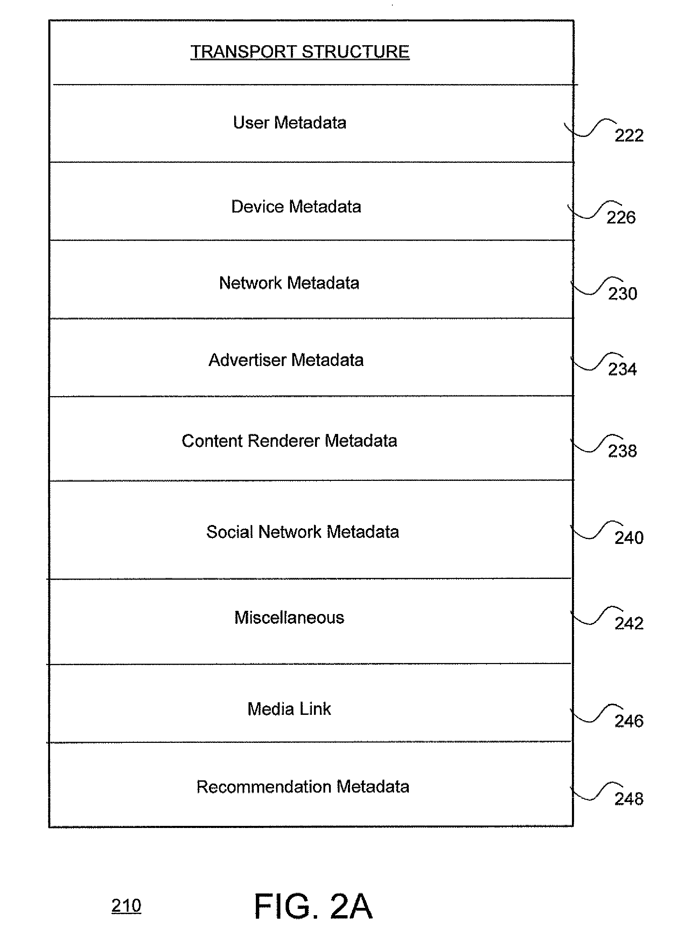

In certain embodiments, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, social networks (see FIG. 1 B), and respective advertisers from information service 118. In addition, the transport structures may also be utilized to transport or provide links to targeted advertisements and/or electronic content for appropriate user devices 122.

In accordance with an embodiment of the present invention, relevant metadata from social networks of device users may provide additional corresponding information to the transport structures for more accurately targeting information to appropriate device users. Embodiments of the present invention thus provide an improved system and method for utilizing a transport structure in a social network environment. Further details regarding the implementation and utilization of transport structures in the FIG. 1A distribution system 110 are discussed below in conjunction with FIGS. 1B-8D.

Referring now to FIG. 1B, a block diagram of a social network 150 is shown, in accordance with one embodiment of the present invention. In the FIG. 1B embodiment, social network 150 may include, but is not limited to, one or more user devices122(a) through 122(m). In FIG. 1B, the user devices 122 may be the same or similar to correspondingly-numbered user devices 122(a) through 122(m) from FIG. 1A.

The FIG. 1B social network 150 is presented for purposes of illustration, and in alternate embodiments, social networks 150 may be implemented by utilizing components and configurations in addition to, or instead of, certain of those components and configurations discussed in conjunction with the FIG. 1B embodiment. For example, any desired number or type of user devices 122 may be utilized by corresponding device users to form social network 150.

In the FIG. 1B embodiment, social network 150 may be defined or created by utilizing any effective means. For example, in certain embodiments, becoming a member of a social network 150 may require a formal registration procedure. In alternate embodiments, members of a given social network 150 may be expressly designated by one or more device users. In addition, in certain embodiments, a social network 150 may be defined by analyzing relevant device user information. For example, factors such as communication frequencies or transaction frequencies may be monitored and analyzed to define a given social network 150.

In the FIG. 1B embodiment, social network metadata may be collected from respective members of social network 150. The social network metadata may then be utilized to generate recommendations for potential advertising that a given device user might wish to receive due to common interests with other members of social network 150. Embodiments of the present invention thus provide various techniques by which information/metadata collected from trusted partners in social network 150 may be continuously collected, analyzed, warehoused, reported, and managed to construct a more accurate profile of a device user's preferences, the device user's social network 150, and the purchasing behavior of the device user and/or the device user's social network 150.

Evaluating the effectiveness of advertisements delivered to device users and user devices 122 is possible through reconciliation of the advertisements selected by the device users, the interaction between advertisements and the device users, the referral of advertisements by device users to others within social network 150, and the eventual purchases made by the device users. Embodiments of the present invention provide an improved system that collects, compares, and reconciles data from one or more transport structures that are served to the user devices 122 and the social network 150. The gathered metadata and any other information may be advantageously analyzed to gain a better understanding of the device users, an understanding of the social network 150, and the effectiveness of various different advertisements.

Referring now to FIG. 2A, a block diagram for one embodiment of a transport structure 210 is shown. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

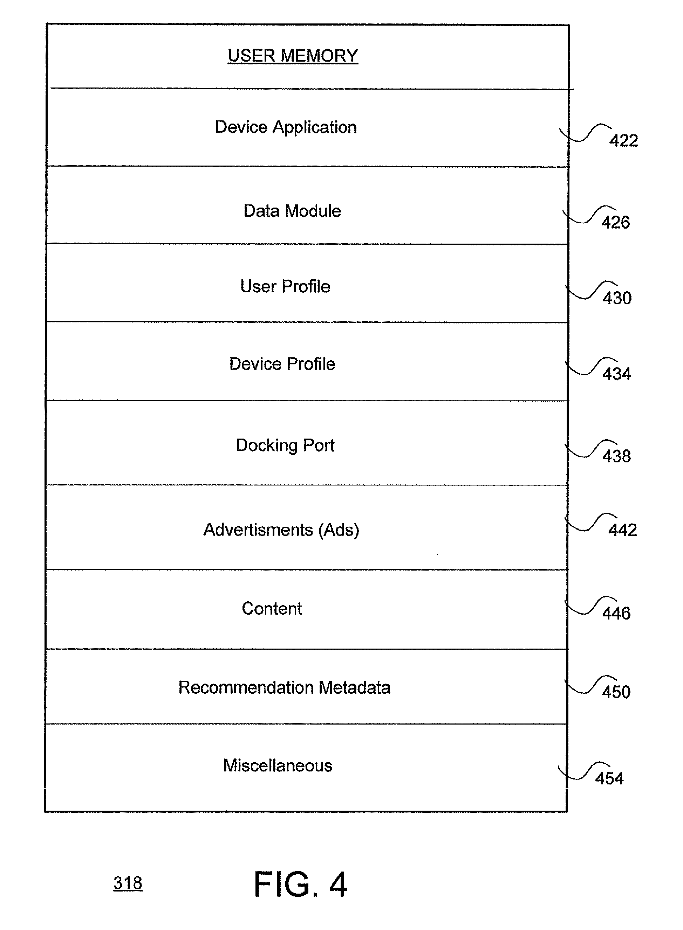

In the FIG. 2A embodiment, each of the metadata categories/fields includes information from one or more devices or entities from respective corresponding metadata-source types. For example, user metadata 222 may include information regarding one or more device users of user devices 122 (FIG. 1A). In certain embodiments, user metadata 222 may be selectively compiled from one or more appropriate user profiles 430 (FIG. 4). Similarly, device metadata 226 may include information regarding one or more user devices 122. In certain embodiments, device metadata 226 may be selectively compiled from one or more appropriate device profiles 434 (FIG. 4). In the FIG. 2A embodiment, network metadata 230 may include information regarding various attributes or entities of electronic network 126 (FIG. 1A).

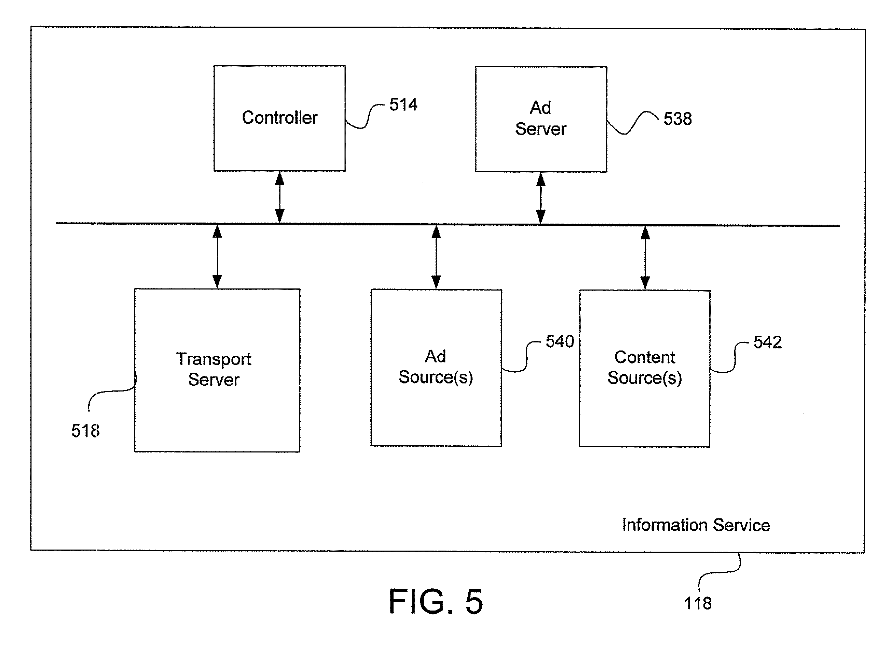

In the FIG. 2A embodiment, advertiser metadata 234 may include information regarding one or more advertisers that are associated with distribution system 110. In certain embodiments, the advertisers may be associated with ad sources 540 (FIG. 5). Similarly, content renderer metadata 238 may include information regarding one or more content renderers that are associated with distribution system 110. In certain embodiments, the content renderers may be associated with content sources 542 (FIG. 5).

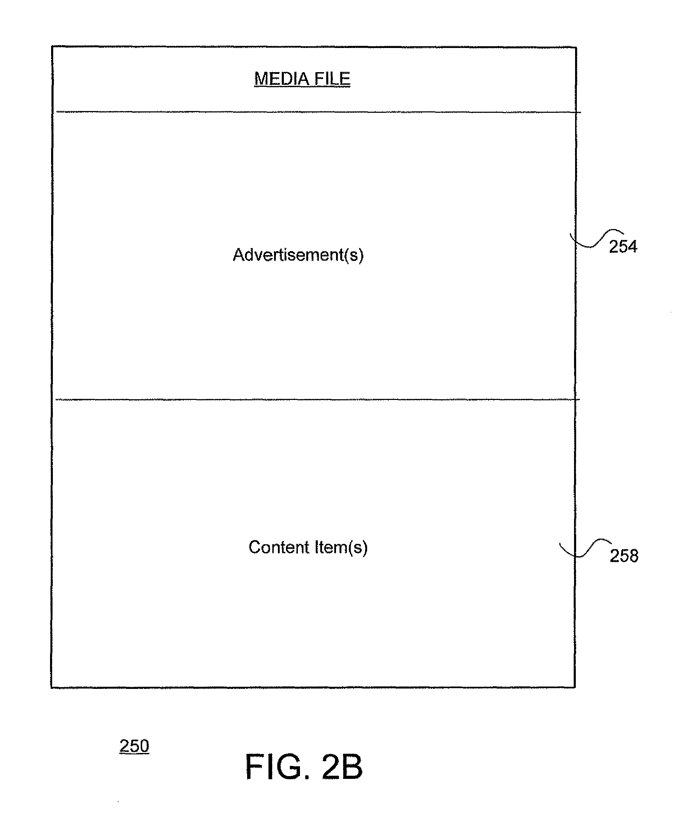

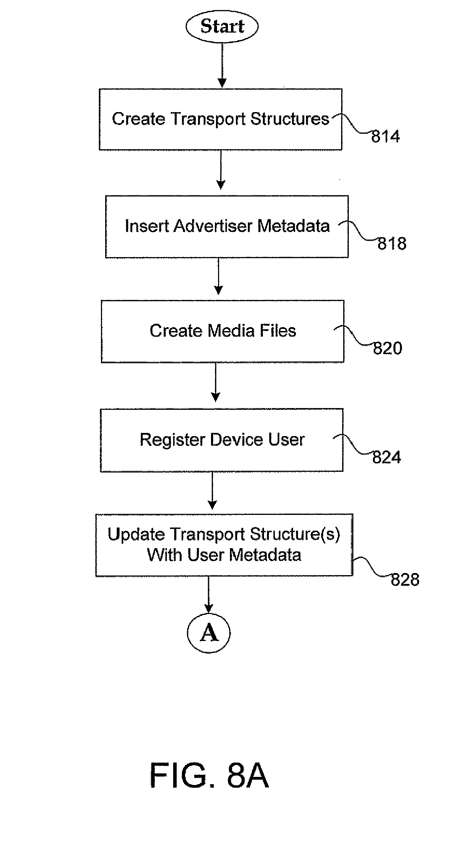

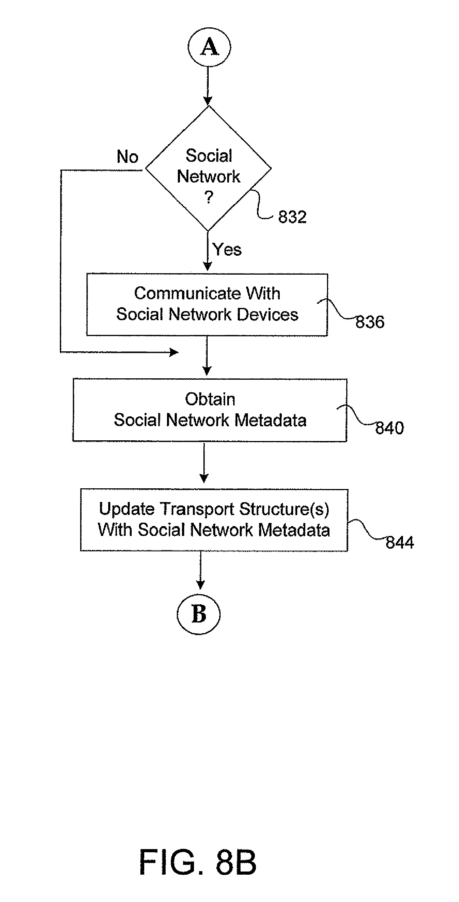

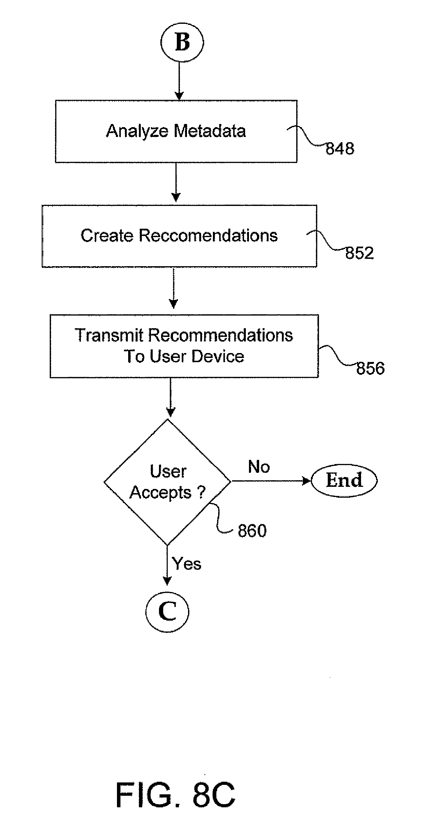

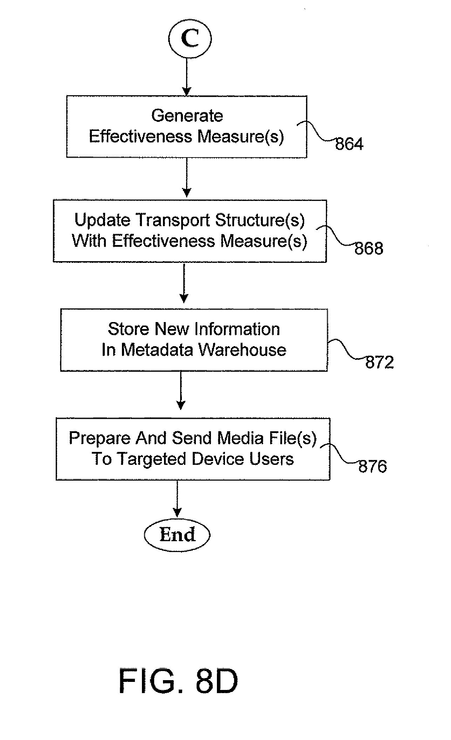

In the FIG. 2A embodiment, social network metadata 240 may include information regarding one or more devices users from a social network 150 (FIG. 1B) that are associated with distribution system 110. The utilization of social network metadata 240 is further discussed below in conjunction with FIG. 8. Miscellaneous information 942 may include any additional data or other appropriate information. Media link 246 may include appropriate information to indicate a location or a connection means for accessing one or more media files, as discussed below in conjunction with FIG. 2B.

In the FIG. 2A embodiment, recommendation metadata 248 may include any appropriate information regarding advertisement recommendations that are generated by analyzing social network metadata 240. Various entities in distribution system 110 may utilize the information in transport structure 210 in any appropriate manner. For example, an ad targeting procedure may be performed by matching compatible elements of user metadata 922, device metadata 926, advertiser metadata 934, and social network metadata 240 to thereby identify appropriate types of relevant advertising information for automatic transmission to targeted device users.

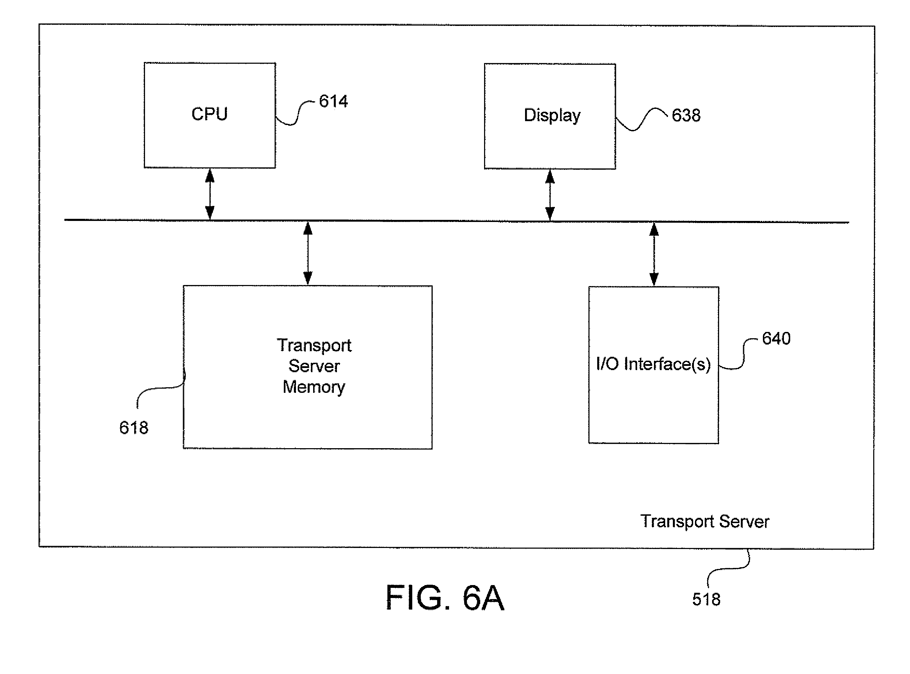

Transport structures 210 may be originated in any effective manner from any appropriate source. For example, transport structures 210 may be embedded in user devices 122 (FIG. 1A), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-8D.

Referring now to FIG. 2B, a block diagram for one embodiment of a media file 250 is shown. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

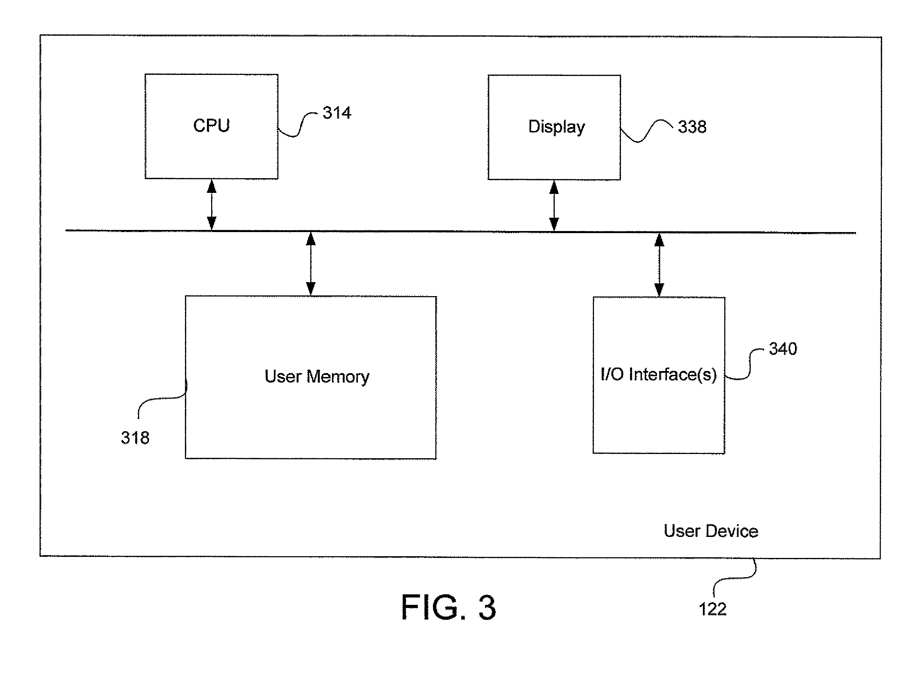

In the FIG. 2B embodiment, advertisements (ads) 254 may include any appropriate type of targeted advertising information that has been selected for transmission to appropriate ones of the user devices 122 (FIG. 1A). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-8D.

Referring now to FIG. 3, a block diagram for one embodiment of a FIG. 1A user device 122 is shown. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-8D.

Referring now to FIG. 4, a block diagram for one embodiment of the FIG. 3 user memory 318 is shown. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, and a device configuration.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1A) specifically for a device user of user device 122. Similarly, content 446 may include targeted electronic content information that has been received via distribution system 110 (FIG. 1A) specifically for a device user of user device 122.

In the FIG. 4 embodiment, recommendation metadata 450 may include any appropriate information regarding advertisement recommendations that are generated and provided to a user device by analyzing social network metadata 240 (FIG. 2A). In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-8D.

Referring now to FIG. 5, a block diagram for one embodiment of the FIG. 1A information service 118 is shown. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2A). Additional details regarding the implementation and utilization of transport server 518 are further discussed below in conjunction with FIG. 6A. In the FIG. 5 embodiment, ad source(s) 540 may include one or more appropriate entities for providing advertisement information for dissemination through distribution system 110 (FIG. 1A). For example, ad sources 540 may include various commercial enterprises, specific advertisers, or advertising developers.

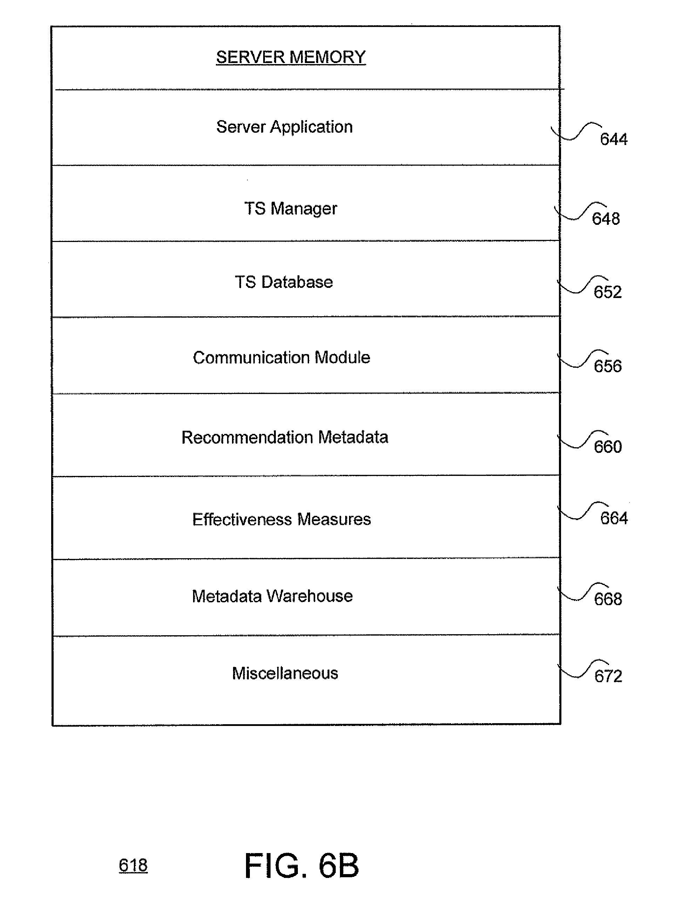

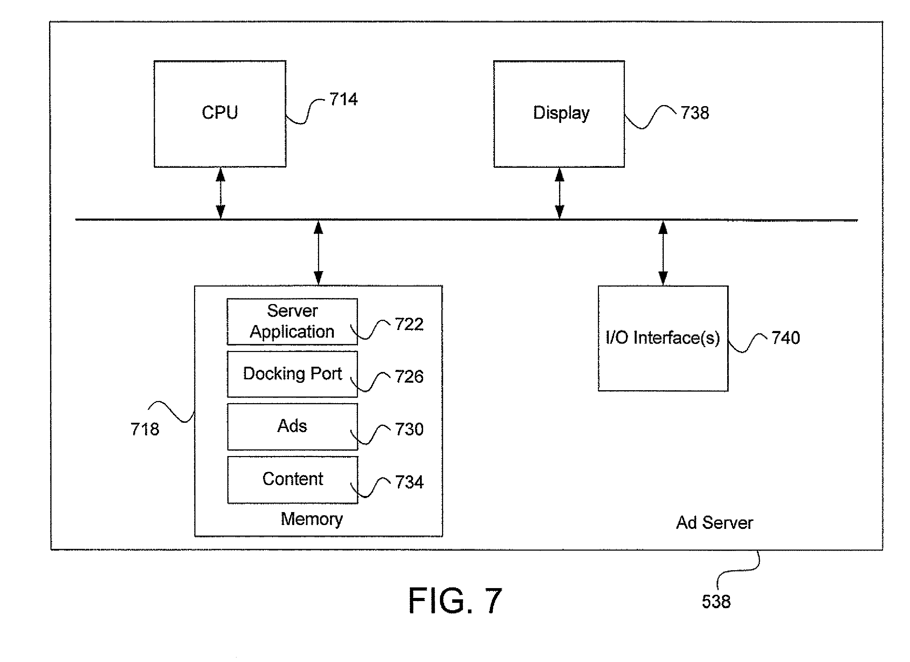

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1A) by utilizing metadata from one or more transport structures 210 (FIG. 2A). One embodiment of ad server 538 is further discussed below in conjunction with FIG. 7. Additional details for the implementation and utilization of information service 118 are further discussed below in conjunction with FIGS. 6-8D.

Referring now to FIG. 6A, a block diagram for one embodiment of the transport server 518 of FIG. 5 is shown. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

Referring now to FIG. 6B, a block diagram for one embodiment of the FIG. 6A transport server memory 618 is shown. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A). In certain embodiments, the TS manager 648 may include a registration module for coordinating registration procedures to register device users of user devices 122 for participating in various authorized distribution services from distribution system 110 (FIG. 1A). The registration module may also be utilized to define a social network 150 (FIG. 1B), as previously discussed. A TS database 652 may include any appropriate information regarding the transport structures 210 that provide distribution services to various entities in distribution system 110.

In certain embodiments, the TS manager 648 may continually update respective transport structure information in the TS database 652 to reflect the current status of transport structures 210 in distribution system 110. The transport server 518 may utilize a communication module 656 to perform bi-directional electronic communication procedures with any appropriate remote entity. For example, the communication module 656 may be utilized to remotely communicate with transport structures 210 in distribution system 110.

In the FIG. 6B embodiment, recommendation metadata 248 may include any appropriate information regarding recommended advertisements or content for transmission to a device user. In certain embodiments, recommendation metadata 248 may be generated by utilizing server application 644 or other appropriate entity to analyze social network metadata 230 (FIG. 2A) from the transport structures 210. in certain embodiments, individual recommendations corresponding to specific members of social network 150 may be utilized. Alternately, individual recommendations may be amalgamated to produce collective recommendations that represent a predefined number of members from the social network 150.

In the FIG. 6B embodiment, effectiveness measures 664 for each recommended advertisement or content item may be calculated by reconciling selected recommendations that are chosen by device users, as compared to the original recommendations. In accordance with embodiments of the present invention, the effectiveness measures 664 may then be utilized as additional relevant targeting criteria when choosing targeted advertisements or content for transmitting to a particular device user.

In the FIG. 6B embodiment, transport server 518 may utilize metadata warehouse 668 to store any type of information or metadata for subsequent reference or utilization. For example, metadata warehouse 668 may include various previous sets of social network metadata 240 (FIG. 2A), prior recommendation metadata 660, and previously-calculated effectiveness measures 664. In the FIG. 6B embodiment, miscellaneous information may include any desired type of information or data for utilization by transport server 518. The utilization of transport server 518 is further discussed below in conjunction with FIG. 8.

Referring now to FIG. 7, a block diagram for one embodiment of the ad server 538 of FIG. 5 is shown. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology inducing a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze information or instructions from transport server 518 or transport structures 210 to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2) to transfer ads 730, content 734, or any other types of information. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

Referring now to FIGS. 8A-8D, a flowchart of method steps for utilizing a transport structure in a social network environment is shown, in accordance with one embodiment of the present invention. The FIG. 8 flowchart is presented for purposes of illustration, and in alternate embodiments, the present invention may utilize steps and sequences other than those steps and sequences discussed in conjunction with the FIG. 8 embodiment.

In step 814 of FIG. 8A, one or more transport structures 210 (FIG. 2A) are initially created in any effective manner. For example, transport structures 210 may be embedded in user devices 122 during manufacture, and then activated by device users. Alternately, an appropriate entity (such as a transport server 518) in a distribution system 110 may create or otherwise provide the initial transport structures 210. In step 818, advertiser metadata 234 from one or more advertisers 814 may be added to the transport structures 210 in any desired manner to represent relevant characteristics and advertising goals of the corresponding advertisers 814.

In step 820, appropriate media files 250 may be created to include information for dissemination to targeted device users through distribution system 110. The media files 250 may include any desired information, such as advertisements 254 and/or content items 258. In step 824, a device user performs a registration procedure to receive information from the distribution system 110. During the registration procedure, the device user typically provides relevant information including, but not limited to, user metadata 222 and device metadata 226. In step 828, the transport structures 210 are updated to include the metadata provided by the device user during the foregoing registration procedure. The FIG. 8A process then advances to step 832 of FIG. 8B through connecting letter "A."

In step 832, the transport server 518 or another appropriate entity in distribution system 110 determines whether any device users have been identified as members of a social network 150 of user devices 122. For example, in certain embodiments, device users may perform a social network registration procedure to define a social network 150 in distribution system 110. In step 836, transport server 518 or other appropriate entity communicates with the user devices 122 in social network 150 by utilizing any effective means.

In step 840, transport server 518 may obtain appropriate social network metadata 240 from the user devices 122 in social network 150. In the FIG. 8 embodiment, social network metadata 240 may include, but is not limited to, information from a user profile 430 and a device profile 434 that collectively describe any desired attributes, preferences, or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, and a device configuration.

In step 844, the transport server 518 updates the transport structures 210 to include any relevant social network metadata 240. The FIG. 8B process then advances to step 848 of FIG. 8C through connecting letter "B." In step 848, the transport server 518 or other appropriate entity in distribution system 110 analyzes the metadata in the transport structures 210 using any appropriate techniques to create transport recommendations. For example, in certain embodiments, transport server 518 may match advertiser characteristics from advertiser metadata 234 with corresponding social network characteristics from one or more device users from the social network 150 to produce transport recommendations.

In step 856, transport server 518 may transmit the transport recommendations to the user device 122 by utilizing any effective means. For example, the transport recommendations may be transmitted to the user device by utilizing transport structure 210. In step 860, the device user either accepts or rejects the transmitted transport recommendations. If the device user rejects the transport recommendations, then the FIG. 8 process may terminate. However, if the device user accepts the transport recommendations, then the FIG. 8C process advances to step 864 of FIG. 8D through connecting letter "C."

In step 864, the transport server 518 or other appropriate entity generates effectiveness measures 664 based upon whether the device user accepts or rejects the original transport recommendations. In step 868, transport server 518 updates the transport structures 210 by storing the calculated effectiveness measures in recommendation metadata 248. In step 872, the transport server 518 may archive any new information or metadata in a metadata warehouse 668 that is implemented in any effective manner to provide access to the archived information and metadata at a subsequent time.

In step 876, the various types of metadata from the transport structures 210 may be analyzed to identify specific targeted information for transmission to the device user. An ad server 538 or other appropriate entity in distribution system 110 may then prepare and send links to the designated media file(s) 250 for allowing the user device 122 of the targeted device user to access the media file(s) 250. For at least the foregoing reasons, embodiments of the present invention therefore provide an improved system and method for utilizing transport structures in a social network environment.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for implementing an information distribution network, comprising:
an information service that is configured to provide information distribution services through said information distribution network;
user devices that device users utilize to communicate with said information service for receiving said information distribution services, a subset of said device users forming a social network with corresponding ones of said user devices; and
a transport structure that communicates with network entities in said information distribution network, said transport structure collecting metadata for providing selected information from said information service to targeted ones of said device users, said metadata including social network metadata from said subset of said device users of said social network.

2. The system of claim 1 wherein said metadata includes said social network metadata and advertiser metadata regarding advertisers associated with said selected information, said social network metadata including user metadata regarding said device users and device metadata regarding said user devices.

3. The system of claim 2 further comprising a transport server that controls said transport structure, said transport server analyzing said metadata to generate transport recommendations for said selected information.

4. The system of claim 3 wherein said transport server transmits said transport recommendations to said targeted ones of said device users by utilizing said transport structure.

5. The system of claim 4 wherein said targeted ones of said device users evaluate said transport recommendations, said targeted ones of said device users either accepting or rejecting said transport recommendations.

6. The system of claim 5 wherein said transport server calculates effectiveness measures for said transport recommendations based upon whether said targeted ones of said device users accept or reject said transport recommendations.

7. The system of claim 6 wherein said transport server archives said metadata in a metadata warehouse for subsequent uses by said information distribution network.

8. The system of claim 1 wherein said transport structure includes a media link to a media file that contains said selected information, said selected information in said media file including advertising information and electronic content.

9. The system of claim 1 wherein said transport structure moves through said information distribution network to collect said metadata, said transport structure also providing media links for said selected information to said targeted ones of said device users.

10. The system of claim 2 wherein said selected information is targeted to said device users by matching aspects of said selected information and said advertiser metadata to specific characteristics from said user metadata, said device metadata, and said social network metadata.

11. A user device for supporting an information distribution procedure, comprising:
a device application that said user device utilizes to communicate with an information service for receiving information distribution services, a device user of said user device being in a social network with other member users and corresponding member user devices in an information distribution network; and
a transport structure that communicates with network entities in said information distribution network, said transport structure collecting metadata for providing selected information from said information service to targeted ones of said device user and said other member users, said metadata including social network metadata from said social network.

12. The user device of claim 11 wherein said metadata includes said social network metadata and advertiser metadata regarding advertisers associated with said selected information, said social network metadata including user metadata regarding said device users and device metadata regarding said user devices.

13. The user device of claim 12 wherein a transport server controls said transport structure, said transport server analyzing said metadata to generate transport recommendations for said selected information.

14. The user device of claim 13 wherein said transport server transmits said transport recommendations to said targeted ones of said social network by utilizing said transport structure.

15. The user device of claim 14 wherein said targeted ones of said social network evaluate said transport recommendations, said targeted ones of said social network either accepting or rejecting said transport recommendations.
